Europäisches Patentamt

European Patent Office

Office européen des brevets

(11) Numéro de publication: **0 149 572**
**B1**

## (12) FASCICULE DE BREVET EUROPÉEN

(45) Date de publication du fascicule du brevet:
23.11.88

(51) Int. Cl.⁴: **G 01 P 15/08**

(21) Numéro de dépôt: **85400035.3**

(22) Date de dépôt: **09.01.85**

(54) **Accéléromètre directif et son procédé de fabrication par micro-lithographie.**

(30) Priorité: **12.01.84 FR 8400414**

(43) Date de publication de la demande:
**24.07.85 Bulletin 85/30**

(45) Mention de la délivrance du brevet:
**23.11.88 Bulletin 88/47**

(84) Etats contractants désignés:
**CH DE GB IT LI NL SE**

(56) Documents cité:
**GB-A-2 006 439**

**IEEE TRANSACTIONS ON ELECTRON DEVICES,
vol. ED-26, no. 12, décembre 1979, pages 1911-1917,
IEEE, New York, US; L. M. ROYLANCE et al.: "A
batch-fabricated silicon accelerometer"**

(73) Titulaire: **COMMISSARIAT A L'ENERGIE
ATOMIQUE, 31/33, rue de la Fédération, F-75015
Paris (FR)**

(72) Inventeur: **Danel, Jean Sébastien, 61, Boulevard
Vallier, F-38100 Grenoble (FR)**
Inventeur: **Delapierre, Gilles, 216 Percevalière,
F-38170 Seyssinet (FR)**
Inventeur: **Michel, France, Rue du Vieux Château
Les Côtes, F-38360 Sassenage (FR)**

(74) Mandataire: **Mongrédien, André, c/o BREVATOME
25, rue de Ponthieu, F-75008 Paris (FR)**

LIBER, STOCKHOLM 1988

## Description

La présente invention a pour objet un accéléromètre directif et son procédé de fabrication par microlithographie. Cet accéléromètre directif permet, comme son nom l'indique, de mesurer une seule composante de l'accélération d'un corps en mouvement.

De façon générale, un accéléromètre comprend, pour l'essentiel, une masse mobile $\underline{m}$ (pendule) et des moyens permettant de mesurer la force $F = m\gamma$ due à l'accélération $\gamma$ d'un corps en mouvement.

Les accéléromètres actuellement commercialisés sont composés par des pièces mécaniques rapportées; les volumes de ces accéléromètres sont très importants, étant donné le grand nombre de pièces les constituant, et leur technologie de fabrication complexe compte tenu notamment du problème de positionnement des différents éléments constituant ces accéléromètres et de leur assemblage.

L'utilisation de techniques issues de la technologie des semiconducteurs se développe actuellement dans le but de diminuer la taille de ces accéléromètres ainsi que leur coût de fabrication, notamment par une fabrication collective sur un même substrat plan. Une telle technique de fabrication d'accéléromètres a été décrite dans un article de K. PETERSEN dans la publication Proceeding of the IEEE, vol. 70, n° 5, de mai 1982.

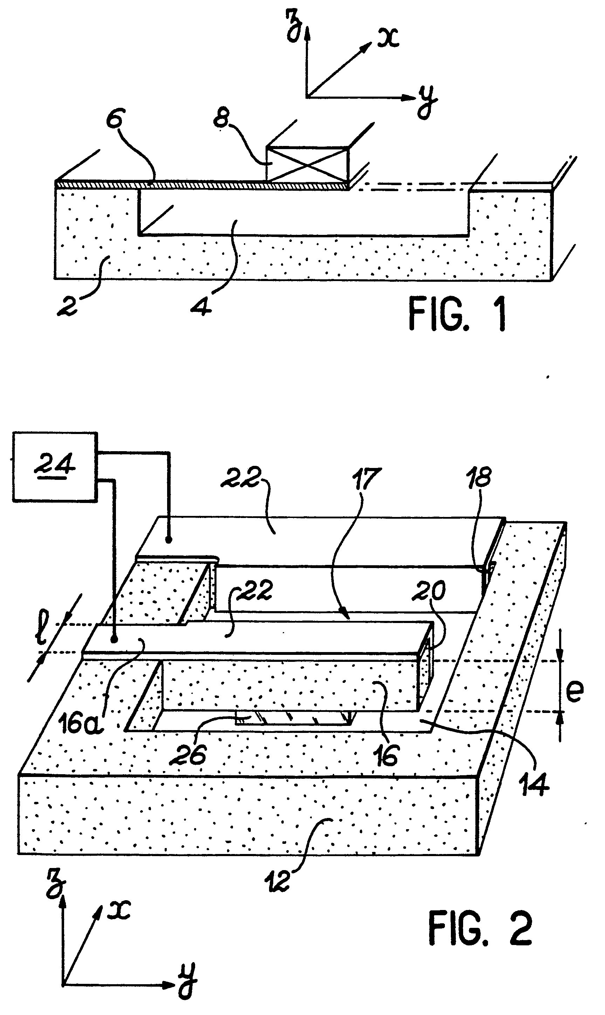

Sur la figure 1, on a représenté, en coupe longitudinale, le schéma de principe d'un accéléromètre réalisé selon cette technique nouvelle. Cet accéléromètre comprend un substrat 2, réalisé par exemple en silicium ou en verre, comportant un évidement 4. Sur la surface supérieure du substrat est déposée, par exemple par dépôt sous vide, une couche mince flexible 6, en forme de poutre, notamment réalisée en silice, en silicium dopé ou en métal, surplombant l'évidement 4 pratiqué dans le substrat. Cette poutre, apte à se déformer ou se déplacer dans une direction perpendiculaire à la surface du substrat, représentée par la direction z, supporte, au niveau de son extrémité libre, une masse sismique 8.

La mesure du déplacement de la masse 8, déplacement qui est proportionnel à la composante de l'accélération selon la direction z que l'on désire mesurer, s'effectue, soit par la mesure de la variation de la capacité du condensateur défini par la couche mince 6 en forme de poutre et le substrat 2, soit à l'aide d'éléments piézorésistifs rapportés sur cette couche mince.

L'accéléromètre décrit ci-dessus, correspondant en fait à ce que l'on sait faire de mieux actuellement sur une plaquette de silicium, présente un certain nombre d'inconvénients. En particulier, la poutre flexible 6 peut être le siège de contraintes internes conduisant à une flexion de ladite poutre, même en l'absence d'accélération; ces contraintes, très difficiles à maîtriser, sont notamment dues au procédé de fabrication de l'accéléromètre. Par ailleurs, ces contraintes varient avec la température.

Un autre inconvénient réside dans l'empilement de matériaux différents qui présentent des coefficients de dilatation différents conduisant également à la formation de contraintes inadmissibles.

De plus, étant donné que la masse 8 rapportée sur la poutre flexible 6 est excentrée par rapport à l'axe de ladite poutre, ce type d'accéléromètre est également sensible à la composante de l'accélération suivant une direction parallèle à la surface du substrat 2, telle que la direction y. Or, un bon accéléromètre directif ne doit être sensible qu'à une seule composante de l'accélération à mesurer. Ce phénomène est encore aggravé lorsque la poutre 6 fléchit en l'absence d'accélération, du fait des contraintes internes de cette même poutre.

Par ailleurs, étant donné le manque de symétrie de la structure de l'accéléromètre, il est très difficile de réaliser une mesure différentielle du déplacement de la masse 8. Or, il n'est pas possible d'effectuer une mesure précise de la position de la poutre sans une telle technique.

Pour remédier à ce manque de symétrie, on peut rapporter un deuxième substrat symétrique au premier par rapport à la couche mince 6. Un tel dispositif est décrit dans un article de IEEE Transactions on Electron Device, vol. ED-26, n° 12, décembre 1979, New York 45 A, pages 1911-1917 intitulé "A batch-fabricated silicon accelerometer" de L.M. ROYLANCE et al. Dans ce dispositif le problème des contraintes internes apparaît alors au niveau du substrat lui-même du fait du scellement. De plus, ce procédé est compliqué et coûteux.

Un autre inconvénient de ces accéléromètres réside dans leur faible sensibilité. En effet, les dimensions de la couche mince 6 en forme de poutre étant fixées, il est difficile d'augmenter la masse sismique 8, celle-ci présentant au plus une épaisseur de quelques microns.

Une variante possible de l'accéléromètre représenté sur la figure 1, consiste à avoir une couche mince 6 fixée à ses deux extrémités au substrat, ce qui permet de mieux fixer la position d'origine de la masse 8, même en présence de contraintes internes dans ladite couche. Cependant, un tel accéléromètre présente une structure beaucoup plus raide et donc une sensibilité réduite.

La présente invention a justement pour objet un accéléromètre directif et son procédé de fabrication, basés sur les technologies de la microélectronique, c'est-à-dire permettant une fabrication collective sur un même substrat, et permettant de remédier à ces différents inconvénients.

De façon plus précise, l'invention a pour objet un accéléromètre directif permettant de mesurer une composante de l'accélération d'un corps en mouvement, comprenant un substrat comportant au moins un évidement et au moins une poutre apte à se déformer dans ledit évidement et des contacts et connexions électriques, servant à connecter des moyens de mesure des déformations de ladite poutre, ces mesures permettant de déterminer ladite composante de l'accélération, caractérisé en ce que la poutre, orientée suivant une première direction, est définie dans le substrat et présente une extremité solidaire du substrat, ladite poutre étant apte à se déformer suivant une seule direction, dite deuxième direction, parallèle à la surface du substrat et perpendiculaire à la première direction, ladite deuxième direction correspondant à la composante de l'accélération à mesurer, et les contacts et connexions électriques étant réalisés sur le substrat.

Cet accéléromètre permet de mesurer une composante de l'accélération dirigée parallèlement à la surface du substrat alors que les accéléromètres de l'art antérieur permettaient de mesurer une composante de l'accélération dirigée perpendiculairement à la surface du substrat.

Par ailleurs, étant donné que la poutre est usinée directement dans le substrat, les problèmes de substrats multiples ou d'empilement de couches sont supprimés, ce qui permet de diminuer considérablement les contraintes mécaniques de l'accéléromètre et d'avoir un accéléromètre ayant une excellente stabilité en température.

Selon un mode préféré de réalisation de l'accéléromètre de l'invention, les moyens de mesure des déformations de la poutre sont réalisés dans le substrat.

Des gammes variées de mesure de l'accélération peuvent être facilement obtenues en jouant sur les dimensions et la forme de la poutre ou par des apports éventuels de masses tout en conservant la symétrie de l'accéléromètre.

De façon avantageuse, la poutre de l'accéléromètre de l'invention a une épaisseur mesurée selon une troisième direction perpendiculaire au substrat très supérieure à sa largeur mesurée selon la deuxième direction. Ceci permet d'obtenir un accéléromètre très directif.

Par ailleurs, selon un mode préféré de réalisation de l'accéléromètre de l'invention, la poutre peut supporter à son extrémité libre un bloc, réalisé dans le substrat, apte à se déplacer dans l'évidement du substrat, suivant ladite deuxième direction, sous l'action de la composante de l'accélération à mesurer. Ceci permet d'éviter d'avoir à rapporter une masse sismique, notamment par voie électrolytique, comme c'était le cas pour les accéléromètres de l'art antérieur.

Bien que le substrat de l'accéléromètre puisse être réalise dans n'importe quel matériau, celui-ci sera réalisé de préférence en silicium ou en quartz α monocristallin.

Selon une variante préférée de réalisation de cet accéléromètre de l'invention, celui-ci comprend un ressort, réalisé dans le substrat, disposé dans le prolongement du bloc et reliant celui-ci au reste du substrat, selon la première direction.

Selon un autre mode préféré de réalisation de l'accéléromètre de l'invention, les moyens de mesure comprennent au moins un condensateur de capacité variable défini par une surface du bloc, généralement transversale à la deuxième direction, une surface du substrat située en regard de ladite surface du bloc, ces surfaces étant recouvertes d'une couche métallique, et par l'espace situé entre lesdites surfaces métallisées.

De façon avantageuse, ces moyens de mesure comprennent aussi au moins un condensateur de capacité constante défini par un autre évidement, réalisé dans le substrat, comportant deux surfaces en regard, généralement transversales à la deuxième direction, recouvertes d'une couche métallique.

Grâce à ce condensateur de capacité constante, il est possible de réaliser une mesure différentielle des déformations de la poutre et/ou du bloc conduisant, ainsi, à une mesure précise de la composante de l'accélération à mesurer, ce qui était difficile avec les accéléromètres de l'art antérieur.

La présente invention a aussi pour objet un procédé de fabrication par microlithographie d'un accéléromètre directif tel que défini précédemment. Ce procédé se caractérise en ce qu'il comprend les étapes suivantes:

- réalisation d'un masque sur le substrat permettant de définir la forme des différents éléments de l'accéléromètre réalisés dans le substrat,
- réalisation d'une gravure des régions du substrat dépourvues de masque, et
- réalisation des contacts et des connexions électriques de l'accéléromètre et des moyens de mesure des déformations de la poutre.

Dans ce procédé de fabrication, les contraintes à l'interface conducteur-substrat agissent perpendiculairement au substrat, donc perpendiculairement à l'axe sensible de l'accéléromètre, et non suivant celui-ci, comme c'était le cas dans les accéléromètres de l'art antérieur. Il en résulte une totale absence de torsion ou de déformation des éléments mobiles de l'accéléromètre, en l'absence d'accélération, ainsi qu'une excellente stabilité en température dudit accéléromètre.

De façon avantageuse, le substrat est gravé au moyen d'une gravure sèche et notamment au moyen d'une gravure ionique réactive, ce type de gravure étant avantageusement applicable à n'importe quel type de matériau constituant le substrat de l'accéléromètre. Par ailleurs, ce type de gravure présente l'avantage de fixer la forme des éléments de l'accéléromètre, réalisés dans le substrat, par la forme du masque et d'être indépendant des problèmes d'orientation cristalline du substrat.

Selon une variante du procédé, on peut également utiliser la gravure chimique anisotrope dans le cas où le substrat est monocristallin (silicium, quartz). Cependant, dans ce cas, si on veut avoir des poutres à flanc bien droit, l'orientation cristalline du substrat ne pourra pas être quelconque.

D'autres caractéristiques et avantages de l'invention ressortiront mieux de la description qui va suivre, donnée à titre explicatif et nullement limitatif, en référence aux figures annexées dans lesquelles:

- la figure 1, déjà décrite, représente, en coupe longitudinale, le schéma de principe d'un accéléromètre directif de l'art antérieur,
- la figure 2 représente une vue en perspective illustrant le principe de l'accéléromètre conformément à l'invention,
- la figure 3 représente une vue en perspective d'un mode de réalisation particulier de l'accéléromètre conformément à l'invention, la figure 3a son équivalent électrique, et
- la figure 4 illustre un mode de réalisation particulier du procédé de fabrication de l'accéléromètre conformément à l'invention.

Sur la figure 2, on a représenté en perspective le schéma de principe de l'accéléromètre selon l'invention. Cet accéléromètre comprend un substrat 12, réalisé de préférence en un matériau isolant, tel que le silicium, la silice ou le quartz α monocristallin, comportant un évidement 14 traversant de part en part le substrat. Cet évidement 14 définit dans le substrat une poutre flexible 16 dont l'extrémité 16a est solidaire du reste du substrat. Cette poutre 16, orientée suivant une direction y, parallèle à la surface supérieure du substrat 12, peut se déformer selon une direction x, parallèle à ladite surface du substrat et perpendiculaire à la direction y, cette direction x correspondant à la direction de la composante de l'accélération à mesurer. La mesure des déformations ou déplacements de la poutre 16 selon la direction x, permet de déterminer la valeur de la composante de l'accélération, selon cette direction, ces déformations étant proportionnelles à la valeur de ladite composante.

Le fait d'usiner la poutre flexible 16 directement dans le substrat 12 permet de s'affranchir des problèmes posés par l'emploi de couches multiples dans les accéléromètres de l'art antérieur.

De façon avantageuse, les moyens permettant de mesurer les déformations de la poutre 16, lorsque celle-ci est soumise à une accélération, peuvent être réalisés dans le substrat 12. Ces moyens peuvent notamment être constitués d'un condensateur de capacité variable 17, défini par l'évidement 14 comportant, à cet effet, deux surfaces latérales métallisées, par exemple 18 et 20, situées en regard et orientées parallèlement à la direction y. Le dépôt de bandes conductrices 22, sur la surface supérieure du substrat 12, permet de connecter le condensateur de capacité variable 17 à un système de mesure 24, de type classique, permettant de déterminer les variations de la capacité dudit condensateur.

A partir de ces mesures, il est aisé de déterminer les valeurs de la composante selon la direction x de l'accélération d'un corps, notées $\gamma_x$, à l'aide de la formule

$$\gamma_x = \frac{K}{m} \times \frac{\varepsilon_0 S}{C} \times \frac{\Delta C}{C}$$

dans laquelle $\varepsilon_0$ est la permittivité diélectrique du vide, S la surface des armatures du condensateur, K la constante de raideur de la poutre, m sa masse et C la capacité du condensateur. $\Delta C$ est la variation de la capacité.

Les différentes connexions et métallisations de l'accéléromètre peuvent être réalisées en une double couche de chrome et d'or.

De façon à obtenir un accéléromètre très directif, c'est-à-dire ne permettant que de mesurer la composante de l'accélération d'un corps, selon la direction x, la poutre 16 devra présenter une épaisseur e très supérieure à sa largeur l, comme représenté sur la figure 2.

Compte tenu de la symétrie de l'accéléromètre et de l'épaisseur de la poutre 16, il est toujours possible d'ajouter à la poutre une ou plusieurs masses sismiques telles que 26. L'adjonction d'une ou plusieurs masses sismiques 26 permet d'augmenter considérablement la sensibilité de l'accéléromètre.

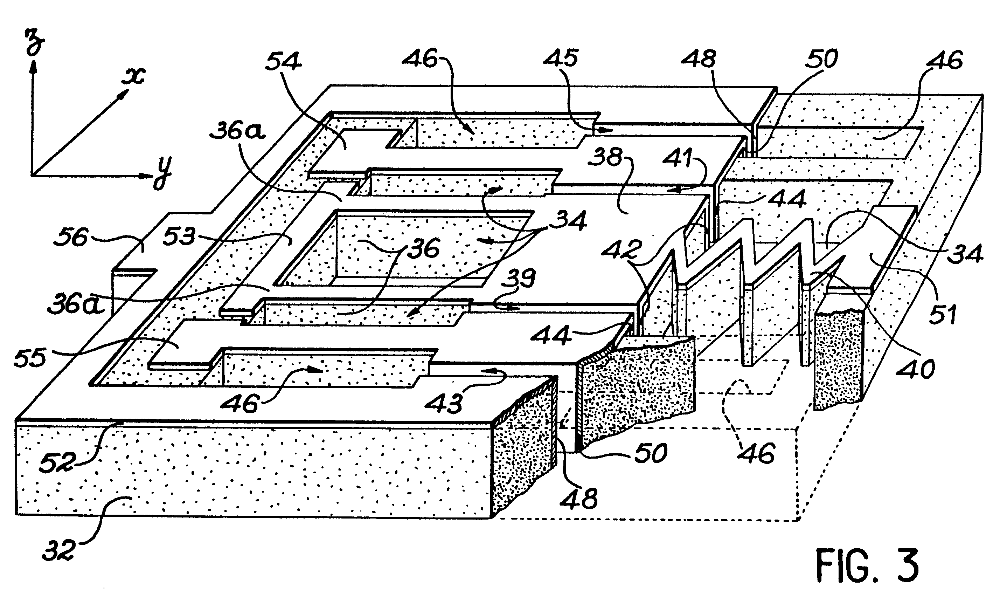

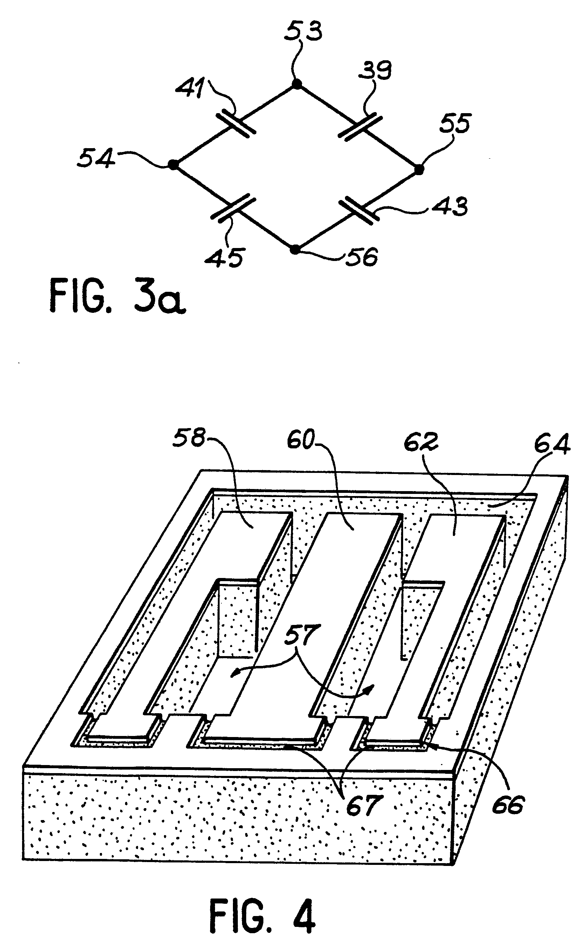

Sur la figure 3, on a représenté, en perspective un mode de réalisation particulier de l'accéléromètre conforme à l'invention.

Cet accéléromètre comprend un substrat 32, réalisé par exemple en silicium ou en quartz α monocristallin de coupe z (coupe selon axe z), dans lequel est pratiqué un évidement 34, traversant de part en part le substrat et définissant, entre autres, dans le substrat, deux poutres flexibles 36 dont l'une des extrémités 36a est solidaire du reste du substrat 32. Ces poutres 36, orientées suivant une direction y parallèle à la surface supérieure du substrat 32, peuvent se déplacer ou plutôt se déformer selon une direction x, parallèle à la surface du substrat et perpendiculaire à la direction y; cette direction x correspond à la direction de la composante de l'accélération à mesurer.

Ces deux poutres 36, ayant une épaisseur très supérieure à leur largeur, supportent à leur extrémité libre un bloc 38, présentant par exemple la forme d'un parallélépipède rectangle, dont l'épaisseur est égale à celle des poutres. Ce bloc 38 réalisé dans le substrat 32, peut se déplacer ou plutôt se déformer dans l'évidement 34 pratiqué dans le substrat et ce, suivant la direction x. Cet accéléromètre comprend aussi un ressort 40, réalisé dans le substrat, disposé dans le prolongement du bloc 38 et de façon symétrique par rapport aux poutres 36, permettant de relier ce dernier au reste du substrat 32. Ce ressort 40, orienté suivant la direction y et ayant une épaisseur égale à celle des poutres 36 permet de connecter électriquement les électrodes (couche 52) déposées sur les parties mobiles (poutres, bloc) de l'accéléromètre, sans pour cela rendre rigide la structure de l'accéléromètre et donc réduire sa sensibilité.

Les moyens de mesure des déformations du bloc 38, selon la direction x, sont aussi réalisés dans le substrat 32. Ces moyens comprennent notamment deux condensateurs identiques de capacité variable 39 et 41. Ces condensateurs sont définis par les faces latérales 42 du bloc 38, c'est-à-dire les faces du bloc orientées parallèlement à la direction y, par les surfaces 44 de l'évidement 34, situées en regard desdites faces latérales 42 du bloc, ces surfaces 44 et 42 étant recouver tes d'une couche métallique, et par l'espace situé entre les surfaces métallisées 42 et 44. Les mesures des variations de la capacité des condensateurs ainsi définis permettent de déterminer les déformations du bloc 38, selon la direction x, lorsque celui-ci est soumis à une accélération selon cette direction.

Afin de réaliser une mesure différentielle des déformations du bloc 38, l'accéléromètre selon l'invention peut être muni d'un ou plusieurs condensateurs de capacité constante 43 et 45. A cet effet, l'accéléromètre comprend des évidements tels que 46, pratiqués dans le substrat 32 et disposés de part et d'autre de l'évidement 34, suivant la direction y. Ces évidements 46 comportent deux surfaces en regard respectivement 48 et 50, orientées suivant la direction y, et recouvertes d'une couche métallique. Les surfaces métallisées 48 et 50 des évidements 46 ainsi que l'espace compris entre ces deux surfaces définissent les condensateurs de capacité constante 43 et 45. Cet espace présente les mêmes dimensions (épaisseur, largeur et longueur) que celui situé entre les surfaces métallisées 42 et 44.

Le dépôt d'une couche métallique 52 sur la surface supérieure du substrat 32 permet de réaliser les différents contacts 53, 54, 55, 56 et connexions électriques des condensateurs de capacité variable 39 et 41 et de capacité constante 43 et 45. Cette couche métallique 52 doit présenter une forme adéquate afin d'éviter des courts-circuits entre les différents condensateurs.

Sur la figure 3a, on a représenté un schéma électrique illustrant le pont de condensateurs de l'accéléromètre représenté sur la figure 3.

La détection des déformations du bloc 38 est réalisée en mesurant le déséquilibre du pont de condensateurs tel que représenté sur la figure 3a.

On peut avantageusement utiliser la mesure de ce déséquilibre pour exercer une force contraire $F_x$ selon la direction x à la force $F = m\gamma$ due à l'accélération $\gamma$ et donc ramener le déséquilibre du pont à zéro (système asservi). L'un des moyens possibles pour exercer cette force $F_x$ consiste à appliquer un champ magnétique $B_z$ perpendiculaire à la surface du substrat et un courant d'intensité $I_y$ selon la direction y entre les points 53 et 51. La force de contre-réaction est alors donnée par l'équation

$$F_x = B_z \times I_y \times I,$$

I étant la longueur du courant sur lequel agit $B_z$. Dans ce cas, la détection capacitive sert de détéction de zéro (bloc au repos) et le courant électrique passant dans l'ensemble poutres, bloc et ressort permet d'équilibrer l'effet de l'accélération à mesurer, au niveau du bloc 38, grâce à l'action du champ magnétique $B_z$. La détermination de l'accélération se fait alors par celle du courant nécessaire pour l'équilibrage du pont de condensateur (figure 3a), courant dont l'intensité $I_y$ est directement proportionnelle à la valeur de l'accélération.

Il est à noter que les moyens de détection décrits ci-dessus servent aussi bien à mesurer des accélérations que des décélérations.

De plus, le système de détection décrit ci-dessus n'est qu'un exemple de réalisation des moyens de mesure. D'autres moyens, basés sur l'emploi de piézo-résistances déposées à la surface supérieure du substrat ou basés sur la détection par voie optique, peuvent être utilisés.

Afin de couvrir une gamme variée d'accélérations, on peut faire varier les dimensions de la masse sismique 26 par simple changement de la forme du masque de gravure.

On va maintenant décrire le procédé de fabrication d'un accéléromètre conforme à l'invention. Ce procédé utilise la technique de microlithographie.

Les différents éléments de l'accéléromètre, réalisés dans le substrat, tels que les poutres 16 ou 36, le bloc 38 et le ressort 40, et les moyens de mesure, peuvent être réalisés en gravant le substrat 2 ou 32 dans lequel sont réalisés ces différents éléments. Cette gravure, qui est par exemple une gravure par voie sèche du type gravure ionique réactive ou par voie humide du type anisotrope, peut être réalisée en utilisant un masque, de préférence réalisé en un matériau conducteur tel qu'une double couche d'or et de chrome, recouvrant la surface supérieure du substrat et permettant de définir la forme exacte des différents éléments de l'accéléromètre.

Dans le cas de la gravure par voie sèche on est limité à une profondeur d'attaque de quelques dizaines de microns et la largeur de la poutre doit être de quelques microns si on veut avoir une bonne directivité. Un substrat intéressant dans ce cas peut être de la silice obtenue par croissance thermique sur du silicium. Une fois la silice traversée lors de la gravure, on peut dégager l'arrière de la poutre par attaque chimique du silicium, support de la silice. L'intérêt d'un tel procédé est qu'il est utilisable sur un circuit intégré en silicium.

Dans une autre variante, on peut effectuer la gravure du substrat uniquement par voie chimique, mais dans ce cas, on est alors dépendant de l'anisotropie cristalline du substrat. En jouant sur cette anisotropie et sur l'anisotropie du produit d'attaque chimique, il est possible d'obtenir la forme désirée des différents éléments constituant l'accéléromètre. De bons candidats pour cette méthode sont le quartz α de coupe z (axe z perpendiculaire au plan du substrat) et le silicium monocristallin pour constituer le substrat. Dans le cas du quartz, on utilisera par exemple comme produit d'attaque un mélange de $HF$ et $NH_4F$ à 90° C.

Les différents contacts et connexions électriques de l'accéléromètre, réalisés sur les surfaces du substrat peuvent être obtenus soit, après avoir éliminé le masque utilisé pour la gravure du substrat, par une simple métallisation, de forme appropriée, de la surface du substrat gravé, soit par une métallisation adéquate du substrat avant de réaliser le masque de gravure sur le substrat alors métallisé.

Une autre méthode pour obtenir ces contacts et ces connexions consiste à réaliser sur le substrat un masque conducteur, de préférence en une double couche de chrome et d'or, permettant de définir, à la fois, les formes des différents éléments de l'accéléromètre, réalisés dans le substrat, et de réaliser lesdits contacts et connexions électriques.

Sur la figure 4, on a représenté le principe du masque unique permettant de définir à la fois la forme des éléments en substrat de l'accéléromètre et de réaliser les contacts et connexions électriques de celui-ci. Ce masque est constitué d'une couche conductrice, recouvrant la surface supérieure du substrat, comportant des bandes conductrices telles que 58, 60, 62, présentant la forme des différents éléments de l'accéléromètre, réalisés dans le substrat et devant être pourvus de contacts et connexions électriques, et un évidement 64, de forme adéquate, laissant apparaître les régions du substrat 57 devant être gravées afin de dégager les différents éléments de l'accéléromètre. De plus, ce masque comprend, au niveau des régions du substrat ne devant pas être gravées, des sillons très fins qui permettent de séparer électriquement les différentes connexions de l'accéléromètre.

L'existence de ces sillons qui constituent une grille portant la référence 66 permet, lors de la gravure du substrat, d'attaquer très faiblement en profondeur celui-ci au niveau de la grille, l'attaque se heurtant à des plans cristallins à très faible vitesse d'attaque et donc de conserver une bonne solidité mécanique. Cette faible attaque du substrat est représentée par des encoches telles que 67. Cette différence de profondeur d'attaque du substrat dépend de la taille des motifs du masque ainsi que de l'anisotropie cristalline du substrat. En effet, lorsque les motifs du masque sont grands (motifs 57), l'attaque se poursuit en profondeur, tandis que lorsque les motifs sont petits (grille 66) l'attaque du substrat n'est que superficielle.

La dernière étape du procédé de fabrication de l'accéléromètre décrit précédemment consiste à réaliser les métallisations verticales permettant de définir les condensateurs de capacité variable ou de capacité constante après avoir masqué mécaniquement le substrat. On peut pour cela utiliser avantageusement l'évaporation sous vide avec un angle d'incidence de l'évaporant sur le substrat différent de 90°.

Le procédé de l'invention permet de réaliser en série plusieurs accéléromètres directifs sur un même substrat pouvant mesurer des gammes variées d'accélération ou de décélération.

**Revendications**

1. Accéléromètre directif pour mesurer une composante de l'accélération d'un corps en mouvement, comprenant un substrat (12, 32) comportant au moins un évidement (14, 34) et au moins une poutre (16, 36) apte à se déformer dans ledit évidement (14, 34) et des contacts et connexions électriques servant à connecter des moyens de mesure (39, 41, 43, 45) des déformations de ladite poutre, ces mesures permettant de déterminer ladite composante de l'accélération, caractérisé en ce que la poutre (16, 36), orientée suivant une première direction (y), est définie dans le substrat (12, 32) et présente une extrémité (16a, 36a) solidaire du substrat, ladite poutre étant apte à se déformer suivant une seule direction, dite deuxième direction (x), parallèle à la surface du substrat et perpendiculaire à la première direction (y), ladite deuxième direction correspondant à la composante de l'accélération à mesurer, et les contacts et connexions électriques étant réalisés sur le substrat.

2. Accéléromètre selon la revendication 1, caractérisé en ce que l'épaisseur (e) de la poutre, mesurée selon une troisième direction (z) perpendiculaire au substrat, est très supérieure à sa largeur (1), mesurée selon la deuxième direction (x).

3. Accéléromètre selon l'une quelconque des revendications 1 et 2, caractérisé en ce que les moyens de mesure (39, 41, 43, 45) sont réalisés dans le substrat.

4. Accéléromètre selon la revendication 1, caractérisé en ce que ladite poutre (36) supporte à son autre extrêmité un bloc (38), réalisé dans le substrat (32), apte à se déplacer dans l'évidement (34) du substrat suivant ladite deuxième direction (x) sous l'action de ladite composante d'accélération.

5. Accéléromètre selon la revendication 4, caractérisé en ce qu'il comprend un ressort (40), réalisé dans le substrat, disposé dans le prolongement du bloc (38) et reliant celui-ci au substrat selon la première direction (y).

6. Accéléromètre selon la revendication 4, caractérisé en ce que les moyens de mesure comprennent au moins un condensateur de capacité variable (39, 41) défini par une surface (42) du bloc (38), généralement transversale à la deuxième direction (x), une surface (44) du substrat (32) située en regard de ladite surface (42) du bloc, ces surfaces étant recouvertes d'une couche métallique et sur l'espace situé entre lesdites surfaces métallisées.

7. Accéléromètre selon la revendication 6, caractérisé en ce que les moyens de mesure comprennent au moins un condensateur de capacité constante (43, 45) défini par un autre évidement (46) réalisé dans le substrat (32), comportant deux surfaces en regard (48, 50), généralement transversales à la deuxième direction (x) recouvertes d'une couche métallique.

8. Accéléromètre selon l'une quelconque des revendications 1 à 7, caractérisé en ce que le substrat est réalisé en silice déposée sur du silicium.

9. Accéléromètre selon l'une quelconque des revendications 1 à 7, caractérisé en ce que le substrat (12, 32) est réalisé en quartz α monocristallin ou en silicium.

10. Accéléromètre selon l'une quelconque des revendications 6 et 7, caractérisé en ce que les moyens de mesure comprennent des moyens permettant de créer un champ magnétique ($B_z$) perpendiculairement à la surface du substrat (32).

11. Procédé de fabrication d'un accéléromètre directif selon l'une quelconque des revendications 1 à 9, caractérisé en ce qu'il comprend les étapes suivantes:
- réalisation d'un masque (58, 60, 62, 66) sur le substrat (32) permettant de définir la forme des différents éléments (16, 36, 38, 40, 39, 41, 43, 45) de l'accéléromètre réalisés dans le substrat,
- réalisation d'une gravure des régions (57) du substrat dépourvues de masque, et
- réalisation des contacts et des connexions électriques de l'accéléromètre et des moyens de mesure (39, 41, 43, 45) des déformations de la poutre.

12. Procédé selon la revendication 11, caractérisé en ce que l'on grave le substrat au moyen d'une gravure sèche.

13. Procédé selon l'une quelconque des revendications 11 et 12, caractérisé en ce que l'on grave le substrat au moyen d'une gravure chimique.

14. Procédé selon l'une quelconque des revendications 11 à 13, caractérisé en ce que le masque est réalisé en un matériau conducteur.

15. Procédé selon la revendication 14, caractérisé en ce que le masque est réalisé en une double couche de chrome et d'or.

16. Procédé selon l'une quelconque des revendications 11 à 15, caractérisé en ce qu'il comprend les étapes successives suivantes:
- réalisation d'un masque sur le substrat (32) permettant de définir la forme des différents éléments (36, 38, 40) de l'accéléromètre réalisés dans le substrat,
- réalisation d'une gravure des régions du substrat dépourvues de masque,
- élimination du masque, et
- métallisation (52) de la surface du substrat gravé afin de réaliser les contacts et les connexions électriques.

17. Procédé selon l'une quelconque des revendications 11 à 15, caractérisé en ce qu'il comprend les étapes successives suivantes:
- métallisation (52) de la surface du substrat (32) afin de réaliser les contacts et les connexions électriques,
- réalisation d'un masque sur le substrat métallisé permettant de définir la forme des différents éléments (36, 38, 40) de l'accéléromètre réalisés dans le substrat,
- réalisation d'une gravure des régions du substrat dépourvues de masque, et
- élimination du masque.

18. Procédé selon l'une quelconque des revendications 11 à 15, caractérisé en ce qu'il comprend les étapes successives suivantes:
- réalisation d'un masque conducteur sur le substrat permettant de définir la forme des différents éléments de l'accéléromètre réalisés dans le substrat et permettant de réaliser les contacts et les connexions électriques, ce masque présentant la forme d'une grille (66) dont les barreaux sont faiblement écartés, au niveau des régions du substrat devant être dépourvues de connexions électriques, et
- réalisation d'une gravure des régions (57) du substrat dépourvues de masque.

19. Procédé selon l'une quelconque des revendications 16 à 18, caractérisé en ce que les moyens de mesure comprenant des condensateurs (39, 41, 43, 45), on réalise une métallisation par dépôt sous vide des surfaces du substrat servant à définir lesdits condensateurs, après avoir masqué mécaniquement le substrat.

**Patentansprüche**

1. Richtungsabhängiger Beschleunigungsmesser zum Messen einer Komponente einer Beschleunigung eines sich bewegenden Körpers, mit einer wenigstens einen Hohlraum (14, 34) aufweisenden Unterlage (12, 32), wenigstens einem in dem genannten Hohlraum (14, 34) angeordneten verformbaren Balken (16, 36) und elektrischen Anschlußkontakten für den Anschluß einer Meßeinrichtung (39, 41, 43, 45) zum Messen der Verformungen des Balkens, anhand welcher Messungen die genannte Beschleunigungskomponente bestimmbar ist, dadurch gekennzeichnet, daß der in einer ersten Richtung (y) ausgerichtete Balken (16, 36) innerhalb der Unterlage (12, 32) ausgebildet und an einem Ende (16a, 36a) fest mit der Unterlage verbunden ist, daß der Balken in einer einzigen, zur Oberfläche der Unterlage parallelen und zur ersten Richtung (y) lotrechten zweiten Richtung (x) verformbar ist, welche der zu messenden Beschleunigungskomponente entspricht, und daß die Kontakte und elektrischen Verbindungen auf der Unterlage ausgebildet sind.

2. Beschleunigungsmesser nach Anspruch 1, dadurch gekennzeichnet, daß die in einer zur Unterlage lotrechten dritten Richtung (z) gemessene Höhe (e) des Balkens beträchtlich größer ist als seine in der zweiten Richtung (x) gemessene Breite (l).

3. Beschleunigungsmesser nach einem der Ansprüche 1 und 2, dadurch gekennzeichnet, daß die Meßeinrichtung (39, 41, 43, 45) in der Unterlage ausgebildet ist.

4. Beschleunigungsmesser nach Anspruch 1, dadurch gekennzeichnet, daß der Balken (36) an seinem anderen Ende einen innerhalb der Unterlage (32) ausgebildeten Block (38) trägt, welcher unter Einwirkung der genannten Beschleunigungskomponente innerhalb des Hohlraums (34) der Unterlage in der zweiten Richtung (x) bewegbar ist.

5. Beschleunigungsmesser nach Anspruch 4, dadurch gekennzeichnet, daß er eine in der Unterlage ausgebildete Feder (40) aufweist, welche in Verlängerung des Blocks (38) angeordnet ist und diesen in der ersten Richtung (y) mit der Unterlage verbindet.

6. Beschleunigungsmesser nach Anspruch 4, dadurch gekennzeichnet, daß die Meßeinrichtung wenigstens einen Kondensator (39, 41) mit variabler Kapazität aufweist, welcher durch eine im wesentlichen quer zur zweiten Richtung (x) angeordnete Oberfläche (42) des Blocks (38) und eine der genannten Oberfläche (42) des Blocks gegenüberstehende Oberfläche (44) der Unterlage (32) gebildet ist, wobei die genannten Oberflächen und ein dazwischen liegender Bereich mit einer Metallschicht überzogen sind.

7. Beschleunigungsmesser nach Anspruch 6, dadurch gekennzeichnet, daß die Meßeinrichtung wenigstens einen Kondensator (43, 45) mit konstanter Kapazität aufweist, welcher in einem anderen Hohlraum (46) in der Unterlage (32) ausgebildet ist und zwei im wesentlichen quer zur zweiten Richtung (x) einander gegenüberstehende und mit einer Metallschicht überzogene Flächen (48, 50) aufweist.

8. Beschleunigungsmesser nach einem der Ansprüche 1 bis 7, dadurch gekennzeichnet, daß die Unterlage aus auf Silizium deponiertem Siliziumoxid ist.

9. Beschleunigungsmesser nach einem der Ansprüche 1 bis 7, dadurch gekennzeichnet, daß die Unterlage (12, 32) aus monokristallinem Quarz α oder aus Silizium gebildet ist.

10. Beschleunigungsmesser nach einem der Ansprüche 6 und 7, dadurch gekennzeichnet, daß die Meßeinrichtung eine Einrichtung umfaßt, mittels welcher ein Magnetfeld ($B_z$) lotrecht zur Oberfläche der Unterlage erzeugbar ist.

11. Verfahren zum Herstellen eines richtungsabhängigen Beschleunigungsmessers nach einem der Ansprüche 1 bis 9, dadurch gekennzeichnet, daß es die folgenden Schritte umfaßt:

Ausbildung einer Maske (58, 60, 62, 66) auf der Unterlage (32) zum Bestimmen der Form der verschiedenen in der Unterlage auszubildenden Elemente (16, 36, 38, 40, 39, 41, 43, 45) des Beschleunigungsmessers,

Ätzen der nicht von der Maske bedeckten Bereiche (57) der Unterlage und

Ausbildung der Kontakte und der elektrischen Anschlüsse des Beschleunigungsmessers sowie der Meßeinrichtung (39, 41, 43, 45) zum Messen der Verformungen des Balkens.

12. Verfahren nach Anspruch 11, dadurch gelennzeichnet, daß die Unterlage in einem trockenen Ätzverfahren geätzt wird.

13. Verfahren nach einem der Ansprüche 11 und 12, dadurch gekennzeichnet, daß die Unterlage in einem chemischen Ätzverfahren geätzt wird.

14. Verfahren nach einem der Ansprüche 11 bis 13, dadurch gekennzeichnet, daß die Maske aus einem leitenden Werkstoff gebildet wird.

15. Verfahren nach Anspruch 14, dadurch gekennzeichnet, daß die Maske in Form einer doppelten Schicht aus Chrom und Gold ausgebildet wird.

16. Verfahren nach einem der Ansprüche 11 bis 15, dadurch gekennzeichnet, daß es die folgenden aufeinanderfolgenden Schritte umfaßt:

Ausbildung einer Maske auf der Unterlage (32) zum Bestimmen der Form der verschiedenen in der Unterlage auszubildenden Elemente (36, 38, 40) des Beschleunigungsmessers,

Ätzen der nicht von der Maske bedeckten Bereiche der Unterlage,

Beseitigung der Maske und

Metallisieren (52) der Oberfläche der geätzten Unterlage zum Herstellen der Kontakte und der elektrischen Anschlüsse.

17. Verfahren nach einem der Ansprüche 11 bis 15, dadurch gekennzeichnet, daß es die nachstehenden aufeinander folgenden Schritte umfaßt:

Metallisieren (52) der Oberfläche der Unterlage (32) zum Herstellen der Kontakte und elektrischen Anschlüsse,

Ausbildung einer Maske auf der metallisierten Unterlage zum Bestimmen der Form der verschiedenen in der Unterlage auszubildenden Elemente (36, 38, 40) des Beschleunigungsmessers,

Ätzen der nicht von der Maske bedeckten Bereiche der Unterlage und

Beseitigen der Maske.

18. Verfahren nach einem der Ansprüche 11 bis 15, dadurch gekennzeichnet, daß es die nachstehenden aufeinander folgenden Schritte umfaßt:

Ausbildung einer leitfähigen Maske auf der Unterlage zum Bestimmen der Form der verschiedenen in der Unterlage auszubildenden Elemente des Beschleunigungsmessers und zum Herstellen der Kontakte und elektrischen Anschlüsse, wobei die Maske die Form eines Gitters (06) hat, dessen Stäbe im Bereich der nicht mit elektrischen Verbindungen oder Anschlüssen zu versehenden Bereiche der Unterlage in geringem Abstand zueinander verlaufen, und

Ätzen der nicht von der Maske bedeckten Bereiche (57) der Unterlage.

19. Verfahren nach einem der Ansprüche 16 bis 18, dadurch gekennzeichnet, daß man zur Ausbildung der die Kondensatoren (39, 41, 43, 45) aufweisenden Meßeinrichtung die zur Ausbildung der Kondensatoren vorgesehenen Oberflächen der Unterlage nach mechanischer Maskierung der Unterlage durch Vakuumauftrag metallisiert.

**Claims**

1. Directional accelerometer for measuring one component of the acceleration of a moving body comprising a substrate (12, 32) having at least one recess (14, 34) and at least one beam (16, 36) able to deform in said recess (14, 34) as well as electrical connections and contacts used for connecting measuring means (39, 41, 43, 45) of the deformations of said beam, said measurements making it possible to determine said component of the acceleration, characterized in that the beam (16, 36), oriented in a first direction (y), is defined in the substrate (12, 32) and has an end (16a, 36a), integral with the substrate, said beam being able to deform in a single direction, called the second direction (x), parallel to the surface of the substrate and perpendicular to the first direction (y), said second direction corresponding to the component of the acceleration to be measured and the electrical connections and contacts being produced on the substrate.

2. Accelerometer according to claim 1, characterized in that the thickness (e) of the beam measured in a third direction (z) perpendicular to the substrate greatly exceeds its width (1) measured in the second direction (x).

3. Accelerometer according to either of the claims 1 and 2, characterized in that the measuring means (39, 41, 43, 45) are produced in the substrate.

4. Accelerometer according to claim 1, characterized in that the other end of the beam (36) supports a block (38), which is formed in the substrate (32) and is able to move in the substrate recess (34) in the second direction (x) under the action of said acceleration component.

5. Accelerometer according to claim 4, characterized in that it comprises a spring (40), formed in the substrate and arranged in the extension of the block (38), connecting the latter to the substrate in the first direction (y).

6. Accelerometer according to claim 4, characterized in that the measuring means comprise at least one variable capacitance capacitor (39, 41) defined by a surface (42) of the block (38) and which is generally directed transversely to the second direction (x), a surface (44) of the substrate (32) facing said surface (42) of the block, said surfaces being covered with a metal layer, and by the space located between said metallized surfaces.

7. Accelerometer according to claim 6, characterized in that the measuring means comprise at least one constant capacitance capacitor (43, 45) defined by another recess (46) formed in the substrate (32), which has two facing surfaces (48, 50), which are generally directed transversely to the second direction (x) and which are covered by a metal layer.

8. Accelerometer according to any one of the claims 1 to 7, characterized in that the substrate is formed from silica deposited on the silicon.

9. Accelerometer according to any one of the claims 1 to 7, characterized in that the substrate (12, 32) is made from monocrystalline $\alpha$ quartz or silicon.

10. Accelerometer according to any one of the claims 6 and 7, characterized in that the measuring means comprise means making it possible to produce a magnetic field $(B_z)$ perpendicular to the surface of the substrate (32).

11. Process for the production of a directional accelerometer according to any one of the claims 1 to 9, characterized in that it comprises the stages of forming a mask (58, 60, 62, 66) on the substrate (32) making it possible to define the shape of the different elements (16, 36, 38, 40, 39, 41, 43, 45) of the accelerometer formed in the substrate, etching regions (57) of the substrate which are free from the mask and forming contacts and electrical connections for the accelerometer and means (39, 41, 43, 45) for measuring deformations of the beam.

12. Process according to claim 11, characterized in that the substrate is etched by a dry etching process.

13. Process accoridng to either of the claims 11 and 12, characterized in that the substrate is etched by means of a chemical etching process.

14. Process according to any one of the claims 11 to 13, characterized in that the mask is formed from a conductive material.

15. Process according to claim 14, characterized in that the mask is made from a double layer of chrome and gold.

16. Process according to any one of the claims 11 to 15, characterized in that it comprises the stages of forming a mask on the substrate (32) making it possible to define the shape of the different elements (36, 38, 40) of the accelerometer produced in the substrate, etching regions of the substrate which are free from the mask, elimination of the mask and metallization (52) of the etched substrate surface in order to produce the electrical connections and contacts.

17. Process according to any one of the claims 11 to 15, characterized in that it comprises metallizing (52) the substrate (32) surface in order to produce the electrical connections and contacts, formation of a mask on the metallized substrate making it possible to define the shape of the different elements (36, 38, 40) of the accelerometer produced in the substrate, etching mask-free substrate regions and eliminating the mask.

18. Process accoridng to any one of the claims

**0 149 572**

11 to 15, characterized in that it comprises the stages of forming a conductive mask on the substrate making it possible to define the shape of the different elements of the accelerometer produced in the substrate and making it possible to produce the electrical connections and contacts, said mask being shaped like a grid (66), whose bars have a limited spacing, in the regions of the substrate which are to be free from electrical connections and etching the mask-free substrate regions (57).

19. Process according to any one of the claims 16 to 18, characterized in that the measuring means comprise capacitors (39, 41, 43, 45) and metallization takes place by vacuum deposition of the substrate surfaces which are used for defining said capacitors, following the mechanical masking of the substrate.

FIG. 1

FIG. 2

FIG. 3

0149572

FIG. 3a

FIG. 4